# EUROPEAN PATENT SPECIFICATION

(11) **EP 2 349 616 B1**
(45) Date of publication and mention of the grant of the patent: **05.12.2018**
(21) Application number: 09748508.0
(22) Date of filing: 23.10.2009
(51) Int. Cl.: B23B 31/20, B23B 31/14, F16D 1/08

(54) **ROTARY CONNECTOR FOR A ROTATING SHANK OR AXLE**
DREHVERBINDER FÜR EINEN DREHSCHAFT ODER EINE ACHSE
CONNECTEUR ROTATIF DESTINÉ À UNE TIGE OU UN AXE ROTATIF

(30) Priority: 23.10.2008 NL 2002128
(43) Date of publication of application: 03.08.2011
(73) Proprietor: Micro Turbine Technology B.V., 5633 AE Eindhoven (NL)
(72) Inventor: KIMMAN, Maarten Hartger, NL-2628 XD Delft (NL); VAN SCHIEVEEN, Jeroen Paul, NL-2274 NZ Voorburg (NL)
(74) Representative: Dekker-Garms, Alwine Emilie
(86) International application number: PCT/NL2009/050640
(87) International publication number: WO 2010/047594

(56) References cited:
- US-A1- 2001 050 466
- US-A1- 2002 152 601
- US-B1- 7 217 072

## Description

The invention relates to a rotary connector for a rotating cylindrical shank or axle of a machine or similar, comprising at least one sleeve body, with an end region having an opening bounded by a circumferentially closed inner-surface for clampingly accommodating said shank or axle, which opening on its circumferential inner-surface is provided with clamping regions for securing the shank or axle with a press fit, and wherein there is a plurality of spokes that extend radially outwards from said sleeve body, wherein the spokes connect to parts of the sleeve body connecting the clamping regions, and wherein at its radially outer end, each spoke connects to a circumferentially provided individual mass, whereby each individual mass only connects to the sleeve body through said spoke and is free from connections with any other spoke.

Such a rotary connector is known from US 2002/152601 A1.

The known rotary connector is intended for accurate clamping of a rotary tool and allows easy mounting and dismounting of such a rotary tool.

A basic embodiment of a rotary connector is known from US 7,217,072 B1, on which the preamble of claim 1 is based. In the known basic embodiment, the rotary connector has spokes which at their outwardly directed extremities are connected with an outer circumferential casing. By appropriately pressing on this circumferential casing, the spokes are tensioned so as to release the clamping regions from the rotary tool.

US 7,217,072 B1 acknowledges the problem associated with centrifugal forces that occur during rotational operation of the rotary connector or tool holder. These centrifugal forces try to displace the tension spokes in the radially outward direction, as a result of which the accommodating opening would widen radially. This may result in the risk of the press fit on the shank or axle being weakened due to this centrifugal force, and in the worst-case scenario even being lost. A solution for this problem is taught by US 7,217,072 B1 in placing masses at appropriate places in the outer circumferential casing that connects the outwardly extending extremities of the spokes. Thus the centrifugal forces may induce inwardly directed compressive forces to the spokes increasing the press fit when high rotational velocities occur due to the additional masses.

It is an object of the invention to provide an alternative to the known rotary connectors, which may be applied at very high rotational speeds.

According to the invention, there is provided a rotary connector according to the independent claim 1. According to the invention the parts of the sleeve body connecting the clamping regions act as levers for converting radially outwards directed forces on the spokes to inwardly directed forces exerted by the clamping regions. With the connector of the invention the benefit is achieved that it is possible to fit the shank or axle in the connector's body manually. This is due to the possibility to apply only a moderate initial clamping force when the connector is still at a standstill.

Beneficially there are three clamping regions symmetrically provided along the inner-circumference of said opening. This provides the advantage that even without pre-positioning of the shank or axle the three clamping-regions provide clamping-lines that accurately define the position of the shank or axle to be clamped, as opposed to the known construction of US 7,217,072 B1 which requires very accurate pre-positioning of the shank or axle due to the nearly circular clamping-line of the connector's inner surface that presses the shank or axle.

Particularly when applying high rotational speeds it is advantageous that the connector is rotationally symmetric with respect to a central body axis through the connector's sleeve body.

The rotary connector as discussed above may be coupled with another (similar) rotary connector through an intermediate elastic coupling. This is an effective means to link two shanks or axels to each other that have to perform the same rotational motion.

In a further preferable aspect of the invention it is possible that the rotary connector has two sleeve bodies each having an end region with an opening for accommodating a shank or axle, which sleeve bodies preferably share a common central body axis and have oppositely directed openings. Advantageously the said two sleeve bodies are integrally formed.

A further beneficial arrangement is that a separating slot is provided at the connector's inner surface at least in part separating the neighbouring clamping regions of said oppositely directed openings. This allows to apply different diameters of the axels or shanks that are to be connected to each other.

The invention will hereinafter be further elucidated with reference to an exemplarily embodiment of the rotary connector of the invention and with reference to the drawing.

In the drawing:
- Fig. 1 shows a cross-section of the rotary connector of the invention;
- Fig. 2 shows an isometric view of the rotary connector of the invention; and
- Fig. 3 shows a cross-section of the rotary connector according to Fig. 1 with an axis of a machine connected thereto.

Whenever in the figures the same reference numerals are applied, these refer to the same parts.

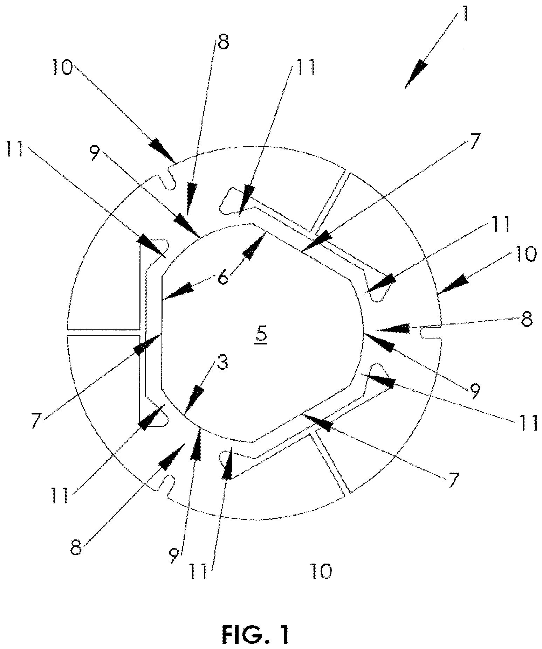

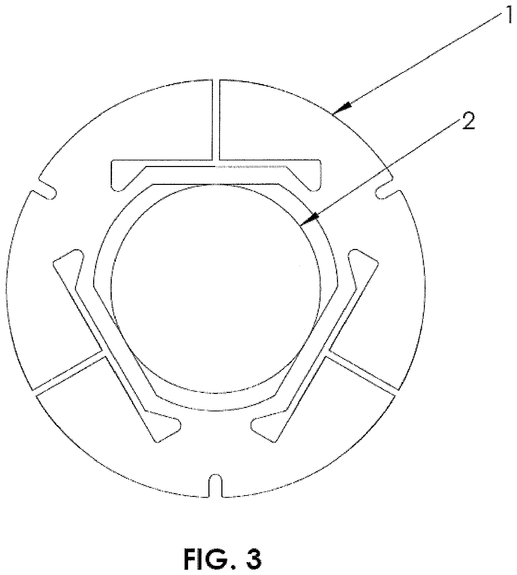

With reference first to Fig. 1 and Fig. 3 the rotary connector 1 of the invention is shown for connecting to a rotating shank or an axel 2 (see Fig. 3) of a machine or other device.

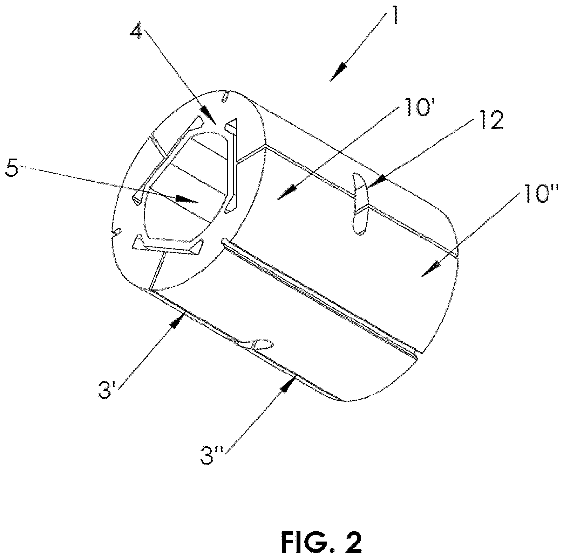

The rotary connector 1 comprises at least one sleeve body 3 with an end region 4 as shown in Fig. 2, that is provided with an opening 5. This opening 5 is bounded by a circumferentially closed inner-surface 6 for clampingly accommodating a shank or axel 2, which schematically is shown in Fig. 3.

The opening 5 is on its circumferentially inner-surface 6 provided with clamping regions 7, which are intended for securing the shank or axel 2 with a press fit, particularly at high rotational speeds of the rotary connector 1 and the axel 2, that is connected thereto.

The figures and in particular Fig. 1 further show that there is a plurality of spokes 8, that extend radially outwards from the sleeve body 3. These spokes 8 connect to parts 9 of the sleeve body 3, connecting the clamping regions 7 and at the radially outer end of each spoke 8, said spokes 8 connect to circumferentially provided individual masses 10, whereby each individual mass 10 only connects to the sleeve body 3 through the concerning spoke 8 to which it connects, and is free from any connections with any of the other spokes 8.

The construction as just described in detail with reference to Fig. 1 ensures that the parts 9 of the sleeve body 3 connecting the clamping regions 7 act as levers for converting radially outwards directed forces on these spokes 8 to inwardly directed forces exerted by the clamping regions 7. Said levers are in Fig. 1 particularly itemized with reference no. 11.

As Fig. 1, Fig. 2 and Fig. 3 clearly show there are preferably three clamping regions 7 that are symmetrically provided along the inner circumference of said opening 5.

The figures further clearly show that preferably the connector 1 is rotationally symmetric with respect to an imaginary central body axis through the connector's sleeve body 3.

As one can simply imagine when looking at the rotary connector 1 shown in Fig. 2, this connector 1 may have two sleeve bodies 3', 3" each having an end region 4 with an opening 5 for accommodating a shank or axel. The sleeve bodies 3', 3" of this rotary connector 1 share a common central body axis and have oppositely directed openings 5. Only one of the openings 5 is visible in Fig. 2.

Fig. 2 further shows that the rotary connector 1 may be provided with a separating slot 12 that is provided in the connector 1 inner surface 6 which serves to at least in part separating the adjacent or neighbouring clamping regions 7 belonging to said oppositely directed openings 5.

## Claims

1. Rotary connector (1) for a rotating cylindrical shank or axle (2) of a machine or similar, comprising at least one sleeve body (3), with an end region (4) having an opening (5) bounded by a circumferentially closed inner-surface (6) for clampingly accommodating said shank or axle (2), which opening (5) on its circumferential inner-surface (6) is provided with clamping regions (7) for securing the shank or axle (2) with a press fit, and wherein there is a plurality of spokes (8) that extend radially outwards from said sleeve body (3), **characterised in that** the spokes (8) connect to parts (9) of the sleeve body (3) connecting the clamping regions (7), and wherein at its radially outer end, each spoke (8) connects to a circumferentially provided individual mass (10), whereby each individual mass only connects to the sleeve body (3) through said spoke (8) and is free from connections with any other spoke, and **in that** the parts (9) of the sleeve body (3) connecting the clamping regions (7) act as levers (11) for converting radially outwards directed forces on the spokes (8) to inwardly directed forces exerted by the clamping regions (7).

2. Rotary connector according to claim 1, **characterized in that** there are three clamping regions (7) symmetrically provided along the inner-circumference of said opening.

3. Rotary connector according to claim 1 or 2, **characterized in that** the connector is rotationally symmetric with respect to a central body axis through the connector's sleeve body (3).

4. Rotary connector according to any of claims 1-3, **characterized in that** the connector (1) has two sleeve bodies (3', 3"), each having an end region (4) with an opening (5) for accommodating a shank or axle, which sleeve bodies (3', 3") share a common central body axis and have oppositely directed openings.

5. Rotary connector according to claim 4, **characterized in that** the two sleeve bodies (3', 3") are integrally formed.

6. Rotary connector according to claim 4 or 5, **characterized in that** a separating slot (12) is provided at the connector's inner surface (6) at least in part separating the adjacent clamping regions (7) of said oppositely directed openings (5).

## Patentansprüche

1. Drehverbinder (1) für einen rotierenden zylindrischen Schaft oder Achse (2) einer Maschine oder Ähnlichem, umfassend mindestens einen Manschettenkörper (3), mit einer Endregion (4), die eine Öffnung (5) aufweist, die durch eine umlaufende, geschlossene, innere Oberfläche (6) begrenzt ist, um klemmend den Schaft oder die Achse (2) aufzunehmen, dessen Öffnung (5) an ihrer umlaufenden inneren Oberfläche (6) mit Klemmregionen (7) ausgestattet ist, um den Schaft oder die Achse (2) mit einer Presspassung zu sichern, und wobei dort eine Mehrzahl an Speichen (8) vorhanden ist, die sich radial von dem Manschettenkörper (3) nach außen erstrecken,
**dadurch gekennzeichnet, dass** die Speichen (8) sich mit Teilen (9) des Manschettenkörpers (3) verbinden, um die Klemmregionen (7) zu verbinden, und wobei an ihrem radial äußeren Ende, jede Speiche (8) sich mit einer umlaufend bereitgestellten, individuellen Masse (10) verbindet, wobei jede individuelle Masse sich nur durch diese Speiche (8) mit dem Manschettenkörper (3) verbindet und frei ist von Verbindungen mit jeder anderen Speiche, und dadurch, dass die Teile (9) des Manschettenkörpers (3), die die Klemmregionen (7) verbinden, als Hebel (11) wirken, um die radial nach außen gerichteten Kräfte auf die Speichen (8) in nach innen gerichtete Kräfte umzuwandeln, die von den Klemmregionen (7) ausgeübt werden.

2. Drehverbinder gemäß Anspruch 1, **dadurch gekennzeichnet, dass** dort drei Klemmregionen (7) symmetrisch entlang der inneren Oberfläche der Öffnung bereitgestellt sind.

3. Drehverbinder gemäß Anspruch 1 oder 2, **dadurch gekennzeichnet, dass** der Verbinder rotationssymmetrisch ist in Bezug auf eine zentrale Körperachse durch den Manschettenkörper (3) des Verbinders.

4. Drehverbinder gemäß jedem der Ansprüche 1 bis 3, **dadurch gekennzeichnet, dass** der Verbinder (1) zwei Manschettenkörper (3', 3") aufweist, jeder eine Endregion (4) mit einer Öffnung (5) zur Aufnahme eines Schafts oder einer Achse aufweist, dessen Manschettenkörper (3', 3") sich eine gemeinsame, zentrale Körperachse teilen und die entgegengesetzt ausgerichtete Öffnungen aufweisen.

5. Drehverbinder gemäß Anspruch 4, **dadurch gekennzeichnet, dass** die beiden Manschettenkörper (3', 3") einstückig ausgebildet sind.

6. Drehverbinder gemäß Anspruch 4 oder 5, **dadurch gekennzeichnet, dass** ein Trennspalt (12) an der inneren Oberfläche (6) des Verbinders bereitgestellt ist, der zumindest teilweise die benachbarten Klemmregionen (7) der entgegengesetzt ausgerichteten Öffnungen (5) trennt.

## Revendications

1. Connecteur rotatif (1) destiné à une tige ou un axe (2) cylindrique tournant d'une machine ou d'un dispositif analogue, comprenant au moins un corps formant manchon (3), avec une zone d'extrémité (4) présentant une ouverture (5) délimitée par une surface intérieure (6) fermée sur la circonférence, pour recevoir par serrage ladite tige ou ledit axe (2), laquelle ouverture (5), sur sa surface intérieure (6) circonférentielle, est dotée de zones de serrage (7) destinées à fixer la tige ou l'axe (2) solidement par ajustage serré, et dans lequel il est prévu une pluralité rayons (8) qui s'étendent radialement vers l'extérieur à partir dudit corps formant manchon (3),
**caractérisé en ce que** les rayons (8) sont reliés à des parties (9) du corps formant manchon (3) reliant les zones de serrage (7), et dans lequel chaque rayon (8), à son extrémité radialement extérieure, est relié à une masse individuelle (10) prévue de façon circonférentielle, ce qui a pour effet que chaque masse individuelle est reliée au corps formant manchon (3) uniquement par l'intermédiaire dudit rayon (8) et n'est reliée à aucun autre rayon, et **en ce que** les parties (9) du corps formant manchon (3) reliant les zones de serrage (7) agissent comme des leviers (11) pour transformer des forces agissant sur les rayons (8) et dirigées radialement vers l'extérieur, en forces dirigées vers l'intérieur, exercées par les zones de serrage (7).

2. Connecteur rotatif selon la revendication 1, **caractérisé en ce qu'**il y a trois zones de serrage (7) qui sont prévues de façon symétrique le long de la circonférence intérieure de ladite ouverture.

3. Connecteur rotatif selon la revendication 1 ou 2, **caractérisé en ce que** le connecteur présente une symétrie de révolution par rapport à un axe de corps central traversant le corps formant manchon (3) du connecteur.

4. Connecteur rotatif selon l'une quelconque des revendications 1 à 3, **caractérisé en ce que** le connecteur (1) comporte deux corps formant manchons (3', 3") présentant chacun une zone d'extrémité (4) avec une ouverture (5) destinée à recevoir une tige ou un axe, lesquels corps formant manchons (3', 3") partagent un axe de corps central commun et ont des ouvertures orientées dans des directions opposées.

5. Connecteur rotatif selon la revendication 4, **caractérisé en ce que** les deux corps formant manchons (3', 3") sont réalisés d'une seule pièce.

6. Connecteur rotatif selon la revendication 4 ou 5, **caractérisé en ce qu'**une rainure de séparation (12) est prévue sur la surface intérieure (6) du connecteur, séparant au moins en partie les zones de serrage (7) adjacentes desdites ouvertures (5) orientées dans des directions opposés.
